# FASCICULE DE BREVET EUROPEEN

(11) **EP 2 087 233 B1**
(45) Date de publication et mention de la délivrance du brevet: **23.05.2012**
(21) Numéro de dépôt: 07823678.3
(22) Date de dépôt: 01.08.2007
(51) Int. Cl.: F03D 3/00, F03D 9/00

(54) **AERATEUR EOLIEN**
WINDBETRIEBENER BELÜFTER
WIND-POWERED AERATOR

(30) Priorité: 27.11.2006 FR 0655112
(43) Date de publication de la demande: 12.08.2009
(73) Titulaire: Tech Sub Industrie Environnement, 62223 Saint Laurent Blangy (FR)
(72) Inventeur: BOUDRIAS, Dany, Brownsburg-Chatham, QC JBG-1H4 (CA)
(74) Mandataire: Balesta, Pierre
(86) Numéro de dépôt international: PCT/FR2007/051766
(87) Numéro de publication internationale: WO 2008/065285

(56) Documents cités:
- EP-A- 0 045 264
- FR-A- 2 852 063
- FR-A1- 2 818 326
- US-A- 4 308 137
- US-A1- 2004 141 851

## Description

La présente invention concerne un aérateur éolien destiné au brassage d'eau et notamment d'eau stagnante comme décrit dans US-A-2004/0141851.

Plus particulièrement, l'aérateur éolien sera avantageusement destiné à équiper des étendues d'eau sujettes à l'eutrophisation telle que des mares, étangs ou encore des lacs.

Toutefois bien que particulièrement prévu pour de telles applications, on pourra également placer l'aérateur sur des fleuves ou rivières ou encore dans des bassins artificiels.

Les aérateurs éoliens peuvent être répartis principalement en deux catégories à savoir d'une part ceux utilisant des capteurs à axe horizontal, parmi lesquels figurent notamment les moulins hollandais, américains ou encore les éoliennes rapides et, d'autre part, les capteurs à axe vertical.

La présente invention constitue un perfectionnement à ce second type d'aérateur éolien à axe vertical.

Le principe des aérateurs éoliens est d'utiliser la force du vent pour entraîner des moyens de brassage d'eau permettant la constitution d'un courant vertical permettant la remontée des eaux profondes sous la surface de l'appareil vers la surface et par conséquent leur oxygénation.

Il a été proposé sur le marché des aérateurs éoliens utilisant comme capteur à axe vertical un rotor de Savonius.

Il s'agit d'un rotor constitué de deux demi-cylindres présentant des axes décalés l'un par rapport à l'autre.

Ce rotor est basé sur le principe de la trainée différentielle, la forme hémicylindrique des deux balles créant une différence dans la forme du flux d'air et donc un couple aérodynamique.

Ce type de rotor de Savonius est particulièrement adapté pour constituer la partie éolienne d'un aérateur notamment parce qu'il est d'une construction particulièrement simple et robuste et que par ailleurs il présente un grand couple de démarrage permettant de démarrer à des vitesses de vent faible.

Toutefois, ce type de rotor présente également des inconvénients et notamment, le fait que ce couple de démarrage peut diminuer et même s'annuler en fonction de l'orientation du rotor par rapport aux vents dominants.

Cette caractéristique des rotors de Savonius peut dans la pratique limiter fortement le rendement des aérateurs, d'autant que ces derniers peuvent être placés sur des lacs dont les alentours peuvent présenter des reliefs accidentés engendrant au niveau du lac des changements d'orientation fréquents et rapides des vents.

La présente invention vise à pallier les inconvénients précités et à cet effet de proposer un aérateur éolien de conception à la fois simple et robuste présentant un couple de démarrage important par vent faible, notamment de l'ordre de quelques kilomètres/heure et quelle que soit l'orientation de ce dernier.

Un autre but de la présente invention est de proposer un aérateur éolien orientable en fonction de la résultante des vents et permettant de limiter les sollicitations au niveau de sa structure et plus précisément au niveau de ses flotteurs et/ou de sa partie aérienne.

Un autre but de la présente invention est de proposer un aérateur éolien dans lequel les moyens de brassage ont une vitesse de rotation élevée permettant d'obtenir un important transfert de volume d'eau autour de l'aérateur.

A cet effet, l'aérateur éolien destiné au brassage d'eau, notamment d'eau stagnante comporte une plateforme équipée d'au moins un flotteur, un capteur d'air à axe vertical de type rotor de Savonius, des moyens de brassage d'eau et un dispositif de transmission entre ledit capteur d'air et lesdits moyens de brassage.

Selon l'invention, ledit aérateur éolien comprend en outre au moins un capteur d'air additionnel disposé sur ledit dispositif de transmission et orienté sensiblement perpendiculairement au capteur principal.

D'autres caractéristiques et avantages de l'invention apparaîtront plus clairement à la lecture de la description ci-après d'un exemple préféré de réalisation dans lequel la description n'est donnée qu'à titre d'exemple non limitatif et en référence aux dessins annexés parmi lesquels :
- la figure 1 représente de manière schématique et en vue de perspective un exemple de réalisation de l'aérateur éolien conforme à l'invention,
- la figure 2 représente selon une seconde vue en perspective l'exemple de réalisation de l'aérateur éolien présenté à la figure 1.

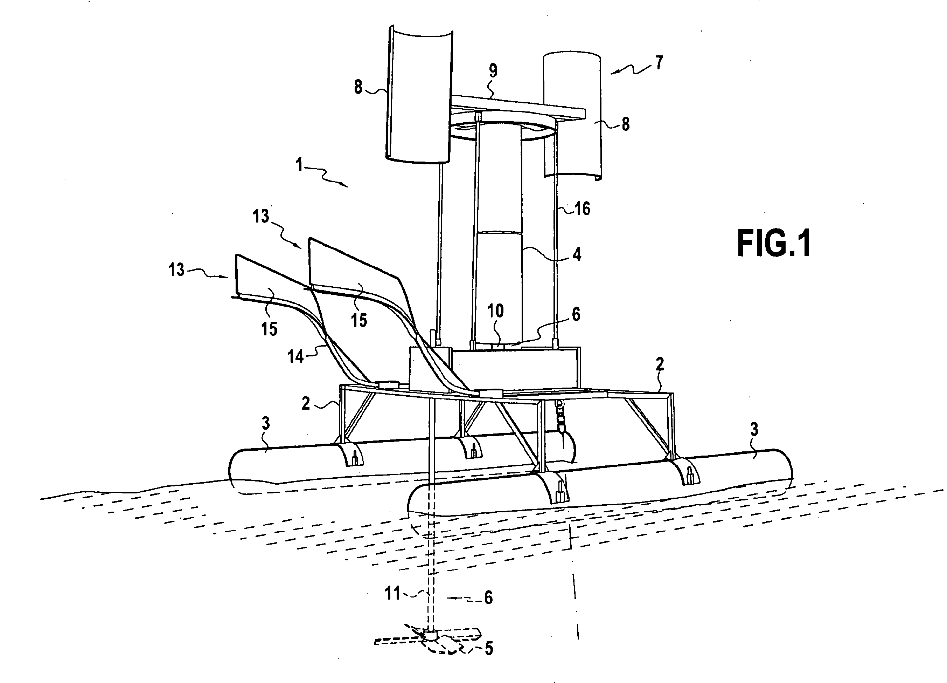

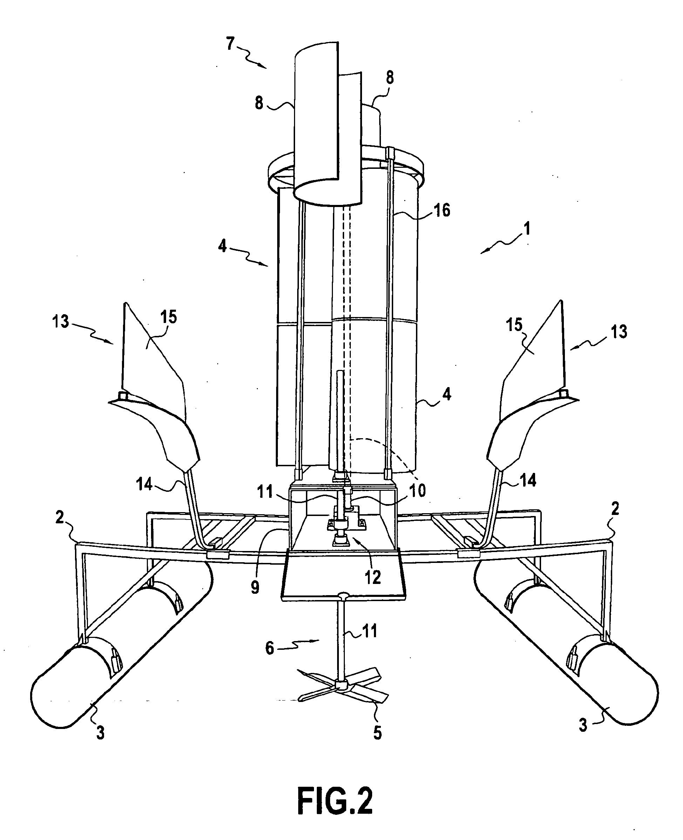

En se reportant aux figures 1 et 2, on voit représenté un aérateur éolien 1 comprenant une plateforme 2 équipé d'au moins un flotteur 3, la plateforme 2 supporte un capteur d'air à axe vertical 4 et maintien des moyens de brassage d'eau 5.

Ledit aérateur éolien 1 comporte en outre un dispositif de transmission 6 entre le capteur 4 et les moyens de brassage 5.

L'aérateur 1 comporte en outre au moins un capteur additionnel 7 disposé sur le dispositif de transmission 6 et orienté sensiblement perpendiculairement au capteur principal 4. Le capteur d'air à axe vertical 4 est de type rotor de Savonius.

Dans l'exemple illustré des figures 1 et 2 le rotor du capteur 4 comporte deux aubages. Toutefois, selon un autre mode de réalisation, le rotor pourra comporter un nombre d'aubages plus important et notamment quatre, permettant d'atténuer les irrégularités de couple inhérentes à un rotor de Savonius à deux aubages.

Dans l'exemple des figures 1 et 2, le capteur additionnel 7 comprend deux aubes 8 reliées entre elles par un montant 9 assujetti au dispositif de transmission 6, éventuellement le capteur pourra comprendre un nombre supérieur d'aubes en fonction des caractéristiques techniques recherchées et notamment du couple.

Le couplage entre les deux capteurs d'air 4 et 7 permet le démarrage et le fonctionnement de l'aérateur éolien 1 pour des faibles vitesses et quelle que soit l'orientation des vents par rapport au capteur principal 4.

Par ailleurs, le capteur additionnel 7 augmente également le couple développé par l'aérateur éolien.

A ce niveau, il est important de noter que d'autres types de capteurs additionnels choisis parmi les capteurs à axe vertical pourraient également être envisagés et notamment le capteur additionnel pourra être un rotor de type Savonius.

Pour permettre un fonctionnement optimal de l'aérateur éolien, comme indiqué plus haut le capteur d'air additionnel 7 est orienté sensiblement perpendiculairement au capteur principal 4. Toutefois, on pourra également prévoir une certaine tolérance notamment au niveau de la fabrication de l'aérateur éolien et notamment l'angle entre le capteur principal 4 et additionnel 7 pourra être compris entre 80° et 90°.

En se reportant cette fois principalement à la figure 2, on voit à la base de la plateforme un logement 9 venant réceptionner une partie du dispositif de transmission 6.

Ce dispositif de transmission 6 comprend un premier arbre de transmission 10 assujetti aux deux capteurs d'air 4 et 7 couplés sur le premier arbre 10 ainsi qu'un second arbre de transmission 11 sur lequel sont positionnés les moyens de brassage d'eau 5. Pour réaliser la liaison entre les arbres de transmission 10 et 11, on prévoit un multiplicateur 12 permettant d'augmenter la vitesse de rotation de l'arbre de transmission 11 par rapport à celle de l'arbre de transmission 10.

Dans le mode de réalisation des figures 1 et 2, le rapport de multiplication est constant entre les deux arbres de transmission 10 et 11.

Toutefois, on pourrait également prévoir dans une variante de réalisation que le multiplicateur comprend des moyens de réglage manuel ou automatique permettant de modifier le rapport de rotation entre les arbres de transmission 10 et 11. Cette disposition permet de contrôler la vitesse de rotation de l'hélice des moyens de brassage 5 et la force de ce brassage.

Selon une autre caractéristique avantageusement de l'invention, on pourra également prévoir des moyens d'orientation 13 de la plateforme 2 par rapport à la résultante des vents.

Pour ce faire, les moyens d'orientation 13 comprennent au moins une queue directionnelle 14 équipée d'ailerons 15.

Avantageusement ces moyens d'orientation 13 sont fixés au niveau de la structure de la plateforme 2 et sont disposés parallèlement à l'axe principal des flotteurs 3 permettant d'orienter ces derniers dans la direction des vagues qui correspond à celle des vents afin d'une part, d'augmenter la stabilité de l'aérateur 1 et d'autre part, de diminuer les contraintes dues au choc des vagues sur les flotteurs 3.

Selon une autre caractéristique de l'invention on pourra également prévoir des systèmes de renfort 16 ou encore des haubans permettant le soutien du capteur d'air principal ou additionnel.

Bien entendu, d'autres modes de réalisation à la portée de l'homme de l'art peuvent également être envisagés sans pour autant sortir du cadre de l'invention défini par les revendications ci-après.

## Revendications

1. Aérateur éolien (1) destiné au brassage d'eau, notamment d'eau stagnante, comportant une plateforme (2) équipée d'au moins un flotteur (3), un capteur d'air à axe vertical (4) de type rotor de Savonius, des moyens de brassage d'eau (5), et un dispositif de transmission (6) entre ledit capteur d'air (4) et lesdits moyens de brassage (5), et au moins un capteur d'air additionnel (7) disposé sur ledit dispositif de transmission (6) et orienté sensiblement perpendiculairement audit capteur principal (4), **caractérisé en ce que** lesdits moyens de brassage (5) comprennent un dispositif rotatif (5) à hélice, et **en ce que** ledit dispositif de transmission (6) comprend un premier arbre de transmission (10) assujetti aux dits capteurs principal et additionnel (4, 7) et relié par l'intermédiaire d'un multiplicateur (12) à un deuxième arbre de transmission (11) sur lequel sont positionnés lesdits moyens de brassage (5).

2. Aérateur éolien selon la revendication 1, dans lequel le capteur additionnel (7) comprend au moins deux aubes (8) reliées entre elles par un montant (9) assujetti au dispositif de transmission (6).

3. Aérateur éolien selon la revendication 1, dans lequel le capteur additionnel (7) est un rotor de type Savonius.

4. Aérateur éolien selon l'une quelconque des revendications 1 à 3, dans lequel l'angle entre le capteur principal (4) et le capteur additionnel (7) est compris entre 80° et 90°.

5. Aérateur éolien selon l'une quelconque des revendications 1 à 4, comportant des moyens d'orientation (13) de la plateforme (2) par rapport à la résultante des vents.

6. Aérateur éolien selon la revendication 5, dans lequel les moyens d'orientation (13) comprennent au moins une queue directionnelle (14) équipée d'ailerons (15), ladite queue (14) étant disposée parallèlement à l'axe principal des flotteurs (3).

7. Aérateur éolien selon l'une quelconque des revendications 1 à 6, comprenant un système de renfort (16) permettant le soutien du capteur d'air principal ou additionnel.

## Claims

1. A wind-powered aerator (1) for stirring water, in particular stagnant water, the aerator comprising a platform (2) fitted with at least one float (3), a vertical axis air catcher (4) of the Savonius rotor type, water stirrer means (5), and a transmission device (6) between said air catcher (4) and said stirrer means (5), and at least one additional air catcher (7) disposed on said transmission device (6) and oriented substantially perpendicularly to the main catcher (4), the aerator being **characterized in that** said stirrer means (5) comprise a propeller rotary device (5), and **in that** said transmission device (6) comprises a first transmission shaft (10) connected to said main and additional catchers (4, 7) and linked to a second transmission shaft (11) via gearing (12) having the stirrer means (5) positioned thereon.

2. A wind-powered aerator according to claim 1, wherein the additional catcher (7) comprises at least two blades (8) interconnected by a crossbar (9) connected to the transmission device (6).

3. A wind-powered aerator according to claim 1, wherein the additional catcher (7) is a rotor of the Savonius type.

4. A wind-powered aerator according to any one of claims 1 to 3, wherein the angle between the main catcher (4) and the additional catcher (7) lies in the range 80° to 90°.

5. A wind-powered aerator according to any one of claims 1 to 4, including pointer means (13) enabling the platform (2) to be pointed relative to the resultant of the winds.

6. A wind-powered aerator according to claim 5, wherein the pointer means (13) comprise at least one directional tail (14) fitted with fins (15), said tail (14) being disposed parallel to the main axis of the float (3).

7. A wind-powered aerator according to any one of claims 1 to 6, including a reinforcing system (16) enabling the main or additional air catcher to be supported.

## Patentansprüche

1. Windkraftlüfter (1) zum Umwälzen von Wasser, insbesondere von stehendem Gewässer, umfassend eine Plattform (2), die mit wenigstens einem Schwimmer (3) ausgestattet ist, einen Windfänger mit vertikaler Achse (4) vom Typ Savonius-Rotor, Mittel zum Umwälzen von Wasser (5) sowie eine Übertragungsvorrichtung (6) zwischen dem Windfänger (4) und den Umwälzmitteln (5) und wenigstens einen Nebenwindfänger (7), der an der Übertragungsvorrichtung (6) angeordnet ist und im wesentlichen senkrecht zu dem Hauptfänger (4) ausgerichtet ist, **dadurch gekennzeichnet, daß** die Umwälzmittel (5) eine sich drehende Schraubenvorrichtung (5) umfassen und daß die Übertragungsvorrichtung (6) eine erste Übertragungswelle (10) umfaßt, die an dem Haupt- und dem Nebenfänger (4, 7) gut befestigt ist und über ein Übersetzungsgetriebe (12) mit einer zweiten Übertragungswelle (11) verbunden ist, an der die Umwälzmittel (5) angeordnet sind.

2. Windkraftlüfter nach Anspruch 1, wobei der Nebenfänger (7) wenigstens zwei Schaufeln (8) umfaßt, die durch eine an der Übertragungsvorrichtung (6) gut befestigte Strebe (9) untereinander verbunden sind.

3. Windkraftlüfter nach Anspruch 1, wobei der Nebenfänger (7) ein Rotor vom Typ Savonius ist.

4. Windkraftlüfter nach einem der Ansprüche 1 bis 3, wobei der Winkel zwischen dem Hauptfänger (4) und dem Nebenfänger (7) zwischen 80° und 90° liegt.

5. Windkraftlüfter nach einem der Ansprüche 1 bis 4, der Mittel zum Ausrichten (13) der Plattform (2) in Bezug auf die Resultierende der Winde umfaßt.

6. Windkraftlüfter nach Anspruch 5, wobei die Ausrichtmittel (13) wenigstens ein mit Rudern (15) ausgestattetes Leitheck (14) umfassen, wobei das Heck (14) parallel zur Hauptachse der Schwimmer (3) angeordnet ist.

7. Windkraftlüfter nach einem der Ansprüche 1 bis 6, der ein Verstärkungssystem (16) umfaßt, das die Stützung des Haupt- oder Nebenwindfängers ermöglicht.
